# EUROPEAN PATENT SPECIFICATION

(11) **EP 3 396 405 B1**
(45) Date of publication and mention of the grant of the patent: **29.09.2021**
(21) Application number: 16877327.3
(22) Date of filing: 19.08.2016
(51) Int. Cl.: G01S 13/89, G01S 13/88, G01V 8/00

(54) **MILLIMETER WAVE THREE-DIMENSIONAL HOLOGRAPHIC SCAN IMAGING APPARATUS AND INSPECTION METHOD FOR HUMAN BODY OR OBJECT**
VORRICHTUNG ZUR DREIDIMENSIONALEN HOLOGRAPHISCHEN SCAN-BILDGEBUNG MIT MILLIMETERWELLEN UND INSPEKTIONSVERFAHREN FÜR MENSCHLICHEN KÖRPER ODER OBJEKT
APPAREIL D'IMAGERIE À BALAYAGE HOLOGRAPHIQUE TRIDIMENSIONNEL À ONDE MILLIMÉTRIQUE ET PROCÉDÉ D'INSPECTION DE CORPS HUMAIN OU D'OBJET

(30) Priority: 23.12.2015 CN 201510976354
(43) Date of publication of application: 31.10.2018
(73) Proprietor: Nuctech Company Limited, TongFang Building, Shuangqinglu, Haidian District Beijing 100084 (CN)
(72) Inventor: CHEN, Zhiqiang, Beijing 100084 (CN); ZHAO, Ziran, Beijing 100084 (CN); QIAO, Lingbo, Beijing 100084 (CN); WU, Wanlong, Beijing 100084 (CN); SHEN, Zongjun, Beijing 100084 (CN); WANG, Ziye, Beijing 100084 (CN)
(74) Representative: Cabinet Beau de Loménie
(86) International application number: PCT/CN2016/096008
(87) International publication number: WO 2017/107515

(56) References cited:
- EP-A2- 2 837 954
- WO-A1-98/11453
- CN-A- 102 508 240
- CN-A- 102 914 802
- CN-A- 103 698 762
- CN-A- 104 375 143
- CN-A- 104 375 144
- CN-A- 105 388 474
- CN-U- 202 453 498
- CN-U- 204 228 955
- KR-A- 20120 100 140
- US-A1- 2005 122 258

## Description

### BACKGROUND OF THE DISCLOSURE

### Field of the Disclosure

The present invention generally relates to a technical field of security inspection, in particular to a millimeter wave three dimensional holographic scan imaging apparatus and a method for inspecting a human body or an article using the millimeter wave three dimensional holographic scan imaging apparatus.

### Description of the Related Art

As public security becomes increasingly serious, it has been an urgent problem that human body security inspection is performed fast and efficiently in crowded places such as airports, subway stations. Presently, the human body security inspection at airports is performed mainly by means of metal detectors held by security inspectors, which can scan the whole body of a passenger. In this way, only metal articles can be detected efficiently, and private parts cannot be inspected. A human body security inspection apparatus mainly includes an X-ray backscattering human body imaging apparatus and a millimeter wave human body imaging apparatus. The X-ray backscattering human body imaging apparatus generates images by using signals scattered back from the human body surface after the X-ray is incident on the human body surface. As the X-ray has ionization property, the safety of the X-ray backscattering human body imaging apparatus in use tends to be doubted by the public. The millimeter wave human body imaging apparatus mainly includes two types, i.e., an active millimeter wave human body imaging apparatus and a passive millimeter wave human body imaging apparatus. The image quality of the active millimeter wave imaging is significantly better than the passive millimeter wave imaging. The good imaging effects ensure high recognition rate for forbidden articles. Thus, the active millimeter wave human body imaging apparatus has gradually become prominent in development of the human body security inspection apparatus. The active millimeter wave imaging technology is mainly related to holographic imaging technology.

In the active millimeter wave three dimensional holographic imaging technology for the human body security inspection, cylindrical scanning imaging technology is applied widely, however, such scanning imaging apparatus has a large footprint and cannot image four sides of an object to be inspected entirely.

Document CN 103 698 762 A discloses a virtual-axis millimeter-wave human body security check system. Document EP 2 837 954 A2 discloses a millimeter wave holographic scan imaging apparatus for inspecting a human body. Document CN 102 914 802 A discloses a millimeter wave imaging scanning detection device and system. Document WO 98/11453 A1 discloses a method and apparatus for achieving near real-time holographic imaging of concealed objects. Document KR 2012 0100140 A discloses a millimeter wave 3D scanning device and a method to transfer a scanning unit to be closed to or away from the object.

### SUMMARY OF THE DISCLOSURE

An object of the present invention is to provide a millimeter wave three dimensional holographic scan imaging apparatus which can fast and efficiently perform the millimeter wave three dimensional holographic scan imaging of all of the sides of an object to be inspected (such as a human body or an article). This apparatus is defined in the appended claim 1

A further object of the present disclosure is to provide a method for inspecting a human body or an article using the millimeter wave three dimensional holographic scan imaging apparatus which can perform the inspection globally, conveniently and fast. It is in particular suitable to various applications of security inspection for a human body or an article. This method is defined in the appended claim 12.

An embodiment of the present invention provides a millimeter wave three dimensional holographic scan imaging apparatus, comprising: a first millimeter wave transceiver module comprising a first millimeter wave transceiver antenna array for transmitting and receiving a first millimeter wave signal and a first millimeter wave transceiver associated with the first millimeter wave transceiver antenna array; a second millimeter wave transceiver module comprising a second millimeter wave transceiver antenna array for transmitting and receiving a second millimeter wave signal and a second millimeter wave transceiver associated with the second millimeter wave transceiver antenna array; a first guide rail device, to which the first millimeter wave transceiver module is connected in slidable form, such that the first millimeter wave transceiver module is moveable in a first scanning track along the first guide rail device to scan a first side and a second side of an object to be inspected; a second guide rail device, to which the second millimeter wave transceiver module is connected in slidable form, such that the second millimeter wave transceiver module is moveable in a second scanning track along the second guide rail device to scan a third side and a fourth side of the object, the third side of the object being opposite to the first side of the object and the fourth side of the object being opposite to the second side of the object; and a driver configured to drive the first millimeter wave transceiver module to move along the first guide rail device and to drive the second millimeter wave transceiver module to move along the second guide rail device, wherein the first guide rail device extends at least along the first side and the second side of the object, and the second guide rail device extends at least along the third side and the fourth side of the object.

In an embodiment, each of the first scanning track and the second scanning track is an L-shaped track, an elliptic arc track or a track formed by a combination of a linear line and a circular arc.

In an embodiment, the scan direction of each of the first millimeter wave transceiver module and the second millimeter wave transceiver module is a horizontal direction and each of the first millimeter wave transceiver antenna array and the second millimeter wave transceiver antenna array extends vertically.

In an embodiment, the scan direction of the first millimeter wave transceiver module is opposite to the scan direction of the second millimeter wave transceiver module.

In an embodiment, the first scanning track and the second scanning track are combined to form a closed track surrounding the object.

In an embodiment, a passage for entrance and exit of the object is provided between the first guide rail device and the second guide rail device.

In an embodiment, the driver comprises: one or more driving wheel; one or more transmission belt engaged with the driving wheel to be driven by the driving wheel to move; and a first sliding base and a second sliding base connected to the first millimeter wave transceiver module and the second millimeter wave transceiver module respectively and mounted on a same transmission belt or on different transmission belts respectively.

In an embodiment, the millimeter wave three dimensional holographic scan imaging apparatus further comprises: a housing configured to surround an inspecting region in which the object is located in inspection, wherein the housing has a first door device and a second door device arranged at two opposed sides of the inspecting region and a passage for the object entering and exiting the inspecting region is provided between the first door device and the second door device.

In an embodiment, at least one of the first door device and the second door device comprises: a slidable door panel which is slidable with respect to the housing; a driving device for the slidable door panel configured to drive the slidable door panel to slide such that the passage is opened before the first millimeter wave transceiver module and the second millimeter wave transceiver module begin to scan and after they stop scanning, and the passage is closed when the first millimeter wave transceiver module and the second millimeter wave transceiver module are scanning.

In an embodiment, at least one of the first door device and the second door device comprises: a first slidable door panel and a second slidable door panel which are slidable with respect to the housing in opposite directions to each other; a door panel sliding belt having a first belt portion and a second belt portion which are movable in opposite directions, the first belt portion and the second belt portion being connected to the first slidable door panel and the second slidable door panel respectively and configured to drive the first slidable door panel and the second slidable door panel to slide in opposite directions; a first pulley and a second pulley engaged with the door panel sliding belt to drive the door panel sliding belt to move, the first belt portion and the second belt portion being arranged on both sides of any one of the first pulley and the second pulley respectively; and a driving motor configured to drive at least one of the first pulley and the second pulley to rotate.

In an embodiment, the housing has a first housing wall and a second housing wall, wherein scanning passages of the first millimeter wave transceiver module and the second millimeter wave transceiver module are defined between the first housing wall and the second housing wall and each of the door panel has a first door panel wall and a second door panel wall, and at least one of the first millimeter wave transceiver module and the second millimeter wave transceiver module is configured to scan along the first door panel wall and the second door panel wall.

In an embodiment, the first housing wall is closer to the inspecting region than the second housing wall and the first door panel wall is closer to the inspecting region than the second door panel wall, wherein the first housing wall and the first door panel wall are at least partly transparent to millimeter wave used by the first millimeter wave transceiver module and the second millimeter wave transceiver module.

In an embodiment, the millimeter wave three dimensional holographic scan imaging apparatus further comprises: a data processing device connected by wireless or wires to the first millimeter wave transceiver module and/or the second millimeter wave transceiver module to receive scanning data of four sides of the object from the first millimeter wave transceiver module and/or the second millimeter wave transceiver module and generate a millimeter wave holographic image/millimeter wave holographic images covering the whole surface of the human body or the inspected object; and a display device connected to the data processing device and configured to receive and display the millimeter wave holographic image(s) from the data processing device.

An embodiment of the present invention provides a method for inspecting a human body or an article using a millimeter wave three dimensional holographic scan imaging apparatus, comprising: arranging the human body or the article to enter an inspecting region and locating a first millimeter wave transceiver module and a second millimeter wave transceiver module at their scan beginning positions respectively; driving the first millimeter wave transceiver module and the second millimeter wave transceiver module by a driver to move from their scan beginning positions to their scan end positions along a first guide rail device and a second guide rail device respectively to scan four sides of the human body or the article, so as to acquire holographic data of four planes; transmitting the holographic data of the four planes acquired by the first millimeter wave transceiver module and the second millimeter wave transceiver module during scanning to a data processing device, in the scanning and/or after the scanning; and reconstructing the holographic data of the four planes using the data processing device to generate a millimeter wave holographic image/millimeter wave holographic images of the human body or the article, wherein the first guide rail device extends at least along the first side and the second side of the object, and the second guide rail device extends at least along the third side and the fourth side of the object.

In an embodiment, the method further comprises: opening a first door device and a second door device of the millimeter wave three dimensional holographic scan imaging apparatus, before the human body or the article enters the inspecting region; and closing the first door device and the second door device after the human body or the article enters the inspecting region and before the first millimeter wave transceiver module and the second millimeter wave transceiver module begin to scan.

In an embodiment, the method further comprises: after the first millimeter wave transceiver module and the second millimeter wave transceiver module stop scanning, opening the first door device and the second door device of the millimeter wave three dimensional holographic scan imaging apparatus and moving the human body or the article out of the inspecting region.

In an embodiment, the method further comprises: after generating the millimeter wave holographic image(s) of the human body or the article, identifying whether the human body or the article entrains suspected objects and identifying the position of the suspected objects and outputting the identified results.

The above at least one embodiment of the present invention can simultaneously achieve millimeter wave holographic imaging to all of sides of the object to be inspected by double L-shaped track scanning. It may reduce volume of the apparatus, and improve the inspection efficiency and accuracy.

### BRIEF DESCRIPTION OF THE DRAWINGS

Figure 1 is a schematic view showing a structure of a millimeter wave three dimensional holographic scan imaging apparatus according to an embodiment of the present invention;
Figure 2 is a schematic view showing a driver of a millimeter wave three dimensional holographic scan imaging apparatus according to an embodiment of the present invention;
Figure 3a is a schematic front view showing a door device of a millimeter wave three dimensional holographic scan imaging apparatus according to an embodiment of the present invention;
Figure 3b is a schematic top view showing a slidable door panel of the door device of a millimeter wave three dimensional holographic scan imaging apparatus according to an embodiment of the present invention;
Figure 3c is a schematic top view showing a door device of a millimeter wave three dimensional holographic scan imaging apparatus according to an embodiment of the present invention;
Figure 4 to Figure 6b show shapes of exemplified scanning tracks of millimeter wave transceiver modules; and
Figure 7 is a flowchart of a method for inspecting a human body or an article in accordance with an embodiment of the present invention.

### DETAILED DESCRIPTION OF THE EMBODIMENTS

Technical solutions of the present invention will be described hereinafter in more detail by the way of embodiment with reference to the attached drawings. The same or similar reference numerals refer to the same or similar elements throughout the description. The explanation of the embodiments of the present invention with reference to the accompanying drawings is intended to elucidate the general inventive concept of the present invention, rather than being construed as limiting the present invention.

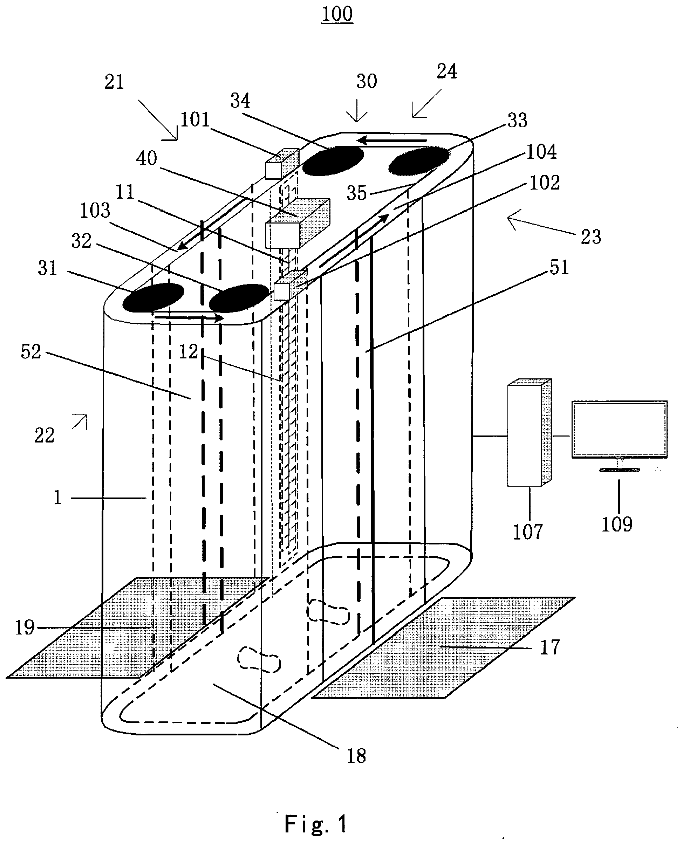

Fig. 1 shows schematically a millimeter wave three dimensional holographic scan imaging apparatus 100 according to an embodiment of the present invention. The millimeter wave three dimensional holographic scan imaging apparatus 100 may include: a first millimeter wave transceiver module including a first millimeter wave transceiver antenna array 11 for transmitting and receiving a first millimeter wave signal and a first millimeter wave transceiver 101 associated with the first millimeter wave transceiver antenna array 11; a second millimeter wave transceiver module including a second millimeter wave transceiver antenna array 12 for transmitting and receiving a second millimeter wave signal and a second millimeter wave transceiver 102 associated with the second millimeter wave transceiver antenna array 12; a first guide rail device 103, to which the first millimeter wave transceiver module 101 is connected in slidable form, such that the first millimeter wave transceiver module 101 is moveable in a first scanning track along the first guide rail device 103 to scan a first side 21 and a second side 22 of an object to be inspected; a second guide rail device 104, to which the second millimeter wave transceiver module 102 is connected in slidable form, such that the second millimeter wave transceiver module 102 is moveable in a second scanning track along the second guide rail device 104 to scan a third side 23 and a fourth side 24 of the object, the third side 23 of the object being opposite to the first side 21 of the object and the fourth side 24 of the object being opposite to the second side 22 of the object; and a driver 30 configured to drive the first millimeter wave transceiver module 101 to move along the first guide rail device 103 and to drive the second millimeter wave transceiver module 102 to move along the second guide rail device 104. The first guide rail device 103 extends at least along the first side 21 and the second side 22 of the object and the second guide rail device 104 extends at least along the third side 23 and the fourth side 24 of the object.

The skilled person in the art should understand that, "a first millimeter wave transceiver 101 associated with the first millimeter wave transceiver antenna array 11" means the first millimeter wave transceiver 101 is electrically connected to the first millimeter wave transceiver antenna array 11 and can cooperate with the first millimeter wave transceiver 101, for example, the first millimeter wave transceiver 101 may provide a millimeter wave signal for the first millimeter wave transceiver antenna array 11 and process the millimeter wave signal received by the first millimeter wave transceiver antenna array 11. Similarly, the skilled person in the art also should understand the phrase of "a second millimeter wave transceiver 102 associated with the second millimeter wave transceiver antenna array 12" also has the similar signification. The details will be omitted herein.

In the embodiment of the present invention shown in Figure 1, each of the first scanning track and the second scanning track is an L-shaped track, that is, the first millimeter wave transceiver module and the second millimeter wave transceiver module both scan along the L-shaped track. Each millimeter wave transceiver module can scan two adjacent sides of the object to be inspected (such as the human body or the article). In this way, the scanning ranges of two millimeter wave transceiver modules may cover four sides of the object to be inspected (such as the human body or the article). It may achieve inspection of forbidden articles or suspected objects in full field of view without rotating or moving the object to be inspected (for example, it is not necessary for the human body to rotate). Meanwhile, such double L-shaped track scanning may use a rectangular track (or a combination of two L-shaped tracks), which can conform with a profile of human body in larger extent and reduce the area occupied by the apparatus, in particular in application at places with limited space, such as airports or subway stations.

As an example, the first scanning track 103 and the second scanning track 104 each may be arranged as an L-shaped track or formed by a part of a rectangular track. In an example, the scan direction of each of the first millimeter wave transceiver module 101 and the second millimeter wave transceiver module 102 is a horizontal direction and each of the first millimeter wave transceiver antenna array 11 and the second millimeter wave transceiver antenna array 12 extends vertically. By means of horizontal scanning, the first millimeter wave transceiver antenna array 11 and the second millimeter wave transceiver antenna array 12 arranged vertically may be used to scan around the object and the scanning track is located in a horizontal plane. It is helpful for arrangement of the apparatus and beneficial for the object to move into and out of the apparatus conveniently and fast. In an example, as indicated by arrows in Figure 1, the scan direction of the first millimeter wave transceiver module is opposite to the scan direction of the second millimeter wave transceiver module. For example, it may prevent the first millimeter wave transceiver module and the second millimeter wave transceiver module from being arranged to face each other in most periods during scanning to reduce the disturbance between the first millimeter wave transceiver module and the second millimeter wave transceiver module. However, it is not necessary; for example, the first millimeter wave transceiver module and the second millimeter wave transceiver module may alternatively have the same scanning direction.

In an example, the first scanning track and the second scanning track may be combined to form a closed track surrounding the object. It may ensure that the scanning ranges of the first millimeter wave transceiver module and the second millimeter wave transceiver module can fully cover all of sides of the object to be inspected.

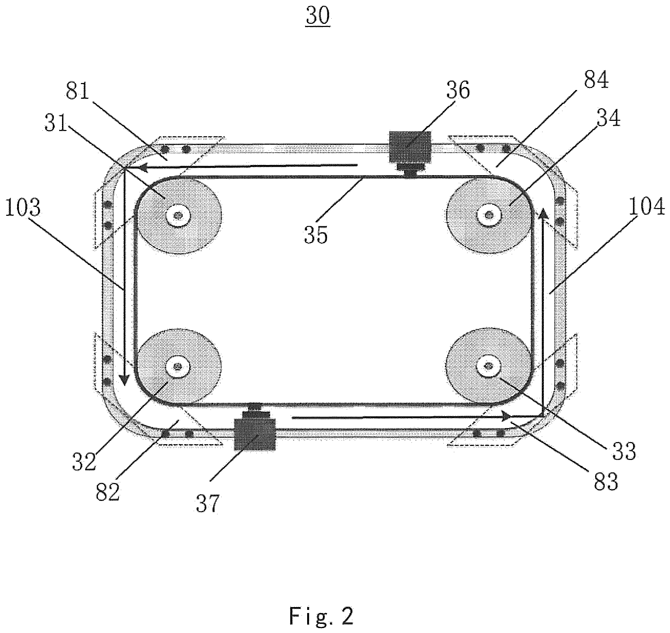

In an example, as shown in Figure 2, the driver 30 may include: driving wheels 31, 32, 33, 34, a transmission belt 35, a first sliding base 36 and a second sliding base 37. The transmission belt 35 is engaged with the driving wheels 31, 32, 33, 34 to be driven by the driving wheels 31, 32, 33, 34 to move. The first sliding base 36 and the second sliding base 37 are connected to the first millimeter wave transceiver module 101 and the second millimeter wave transceiver module 102 respectively and mounted on the transmission belt 35.

As an example, the driving wheels 31, 32, 33, 34 may be driven by a driving shaft and a driving motor to rotate. Although Figure 2 shows four driving wheels 31, 32, 33, 34, the number of the driving wheels in the embodiment of the present invention is not limited to this. Alternatively, one, two, three or more than four driving wheels may also be used. In the case where a plurality of driving wheels are used, all of the driving wheels may be set as drive wheels; or one or some of the driving wheels may be set as drive wheels while the other driving wheels may be set as driven wheels. For example, in the example shown in Figure 2, the driving wheels 31 and 33 may be set as the drive wheels while the driving wheels 32 and 34 may be set as the driven wheels. In the case where a plurality of driving wheels are used, these drive wheels may work independently or work in cooperation.

Figure 2 shows one transmission belt 35, however, the embodiments of the present invention are not limited to this, for example, two or more transmission belts may be provided. In the case where a plurality of transmission belts are provided, as an example, the first sliding base 36 and the second sliding base 37 may be mounted on different transmission belts respectively. However, the first sliding base 36 and the second sliding base 37 may be mounted on the same transmission belt. When the first sliding base 36 and the second sliding base 37 are mounted on the same transmission belt, the first millimeter wave transceiver module and the second millimeter wave transceiver module are both driven by the same transmission belt, which is beneficial to synchronize movements of the first millimeter wave transceiver module and the second millimeter wave transceiver module during scanning. The sliding base 36 and the second sliding base 37 are configured to connect the first millimeter wave transceiver module and the second millimeter wave transceiver module to the transmission belt respectively, such that the first millimeter wave transceiver module and the second millimeter wave transceiver module can be driven by the driving wheels to scan.

As an example, the transmission belt 35 may be a known member in the art that can achieve the above transmission function such as a leather belt, a cable. The transmission belt 35 also provides a certain constraint on the scanning motions of the first millimeter wave transceiver module and the second millimeter wave transceiver module while performing transmission, for example, it may cause the first millimeter wave transceiver module and the second millimeter wave transceiver module to keep equal speeds to each other in movements.

In another example, if the first sliding base 36 and the second sliding base 37 are mounted on different transmission belts respectively, the scanning motions of the first millimeter wave transceiver module and the second millimeter wave transceiver module may be controlled independently. For example, different sides or different local parts of the object to be inspected may need to be scanned at different resolutions, which may achieve a balance between detection precision and efficiency. In this circumstance, the first millimeter wave transceiver module and the second millimeter wave transceiver module may scan at different speeds. As an example, the speed of the transmission belt 35 may be constant or variable in scanning. The variable speed of the transmission belt 35 may achieve variable-speed scanning of the first millimeter wave transceiver module and the second millimeter wave transceiver module, so as to provide more flexibility for the detection work. As an example, the first millimeter wave transceiver module and the second millimeter wave transceiver module may also move in the same direction or opposite directions to each other in scanning respectively by means of limiting the motion direction of the transmission belt.

In Figure 2, the first guide rail device 103 and the second guide rail device 104 form an entire rectangular ring track. Figure 2 also shows fixing devices 81, 82, 83 and 84 at four corners of the rectangular ring track. The fixing devices 81, 82, 83 and 84 may be configured to fix the first guide rail device 103 and the second guide rail device 104 onto a housing 1 of the millimeter wave three dimensional holographic scan imaging apparatus 100, to keep stability of the first guide rail device 103 and the second guide rail device 104. The driver 30 as shown in Figure 2 may be arranged only on the top or bottom of the housing 1 of the millimeter wave three dimensional holographic scan imaging apparatus 100. The same drivers 30 may also be arranged on the top and bottom of the housing 1 of the millimeter wave three dimensional holographic scan imaging apparatus 100, to improve the scanning stability.

In an example, the millimeter wave three dimensional holographic scan imaging apparatus 100 may further include a data processing device 107. The data processing device 107 is connected by wireless or wires to the first millimeter wave transceiver module and/or the second millimeter wave transceiver module to receive scanning data of four sides of the object from the first millimeter wave transceiver module and/or the second millimeter wave transceiver module and generate a millimeter wave holographic image/millimeter wave holographic images. The millimeter wave three dimensional holographic scan imaging apparatus 100 may further include a display device 109. The display device 109 is connected to the data processing device 107 and configured to receive and display the millimeter wave holographic image(s) from the data processing device 107.

In an example, the data processing device 107 may be configured to generate a control signal and transmit the control signal to the driver 30 to drive the first millimeter wave transceiver module and/or the second millimeter wave transceiver module to move. In another example, the millimeter wave three dimensional holographic scan imaging apparatus 100 may also include a controller 40 separated from the data processing device 107.

As an example, at least one of the first millimeter wave transceiver antenna array 11 and the second millimeter wave transceiver antenna array 12 is provided with a column of transmitting antennas and a column of receiving antennas arranged to misaligned with each other. For example, the column of receiving antennas may be arranged in parallel to the column of transmitting antennas, but the column of receiving antennas may be offset by half of a size of one antenna in the vertical direction. When the antenna array works, at each time, only one transmitting antenna and one receiving antenna adjacent to it work. By triggering an electronic switch, fast scanning in the vertical direction may be achieved. The millimeter wave transceiver system uses a step-frequency continuous wave scanning method. The frequency scanning range may be 27-33GHz. The number of frequency scanning points depends on the maximum imaging distance.

As an example, when the first millimeter wave transceiver module and/or the second millimeter wave transceiver module work, a millimeter wave source may generate two ways of millimeter wave signals. One way of millimeter wave signal is used as a transmitting signal and the millimeter wave is transmitted by an amplifier and a transmission antenna to the object to be inspected; the other way of millimeter wave signal is used as a reference signal and mixed with the millimeter wave signal received by the receiving antenna to obtain the millimeter wave holographic data by I/Q demodulation. As an example, the first millimeter wave transceiver module and the second millimeter wave transceiver module may use the same millimeter wave scanning frequency.

Alternatively, in order to reduce the signal disturbance between the first millimeter wave transceiver module and the second millimeter wave transceiver module, in an example, the first millimeter wave signal transmitted and received by the first millimeter wave transceiver module and the second millimeter wave signal transmitted and received by the second millimeter wave transceiver module may have different frequencies. Or, in another example, the time at which the first millimeter wave transceiver antenna array in the first millimeter wave transceiver module transmits millimeter waves may be different from the time at which the second millimeter wave transceiver antenna array in the second millimeter wave transceiver module transmits millimeter waves during scanning the object to be inspected by both the first millimeter wave transceiver module and the second millimeter wave transceiver module, that is, the two modules transmit the respective millimeter waves at different times. It may also reduce or avoid the signal disturbance between the first millimeter wave transceiver module and the second millimeter wave transceiver module.

In an embodiment of the present invention, the millimeter wave three dimensional holographic scan imaging apparatus further includes: a housing 1 configured to surround an inspecting region 18 in which the object is located in inspection. The housing 1 has a first door device 51 and a second door device 52 arranged at two opposed sides of the inspecting region 18. A passage for the object entering and exiting the inspecting region 18 is provided between the first door device 51 and the second door device 52.

With the above structure of the housing 1, the first door device 51 and the second door device 52, on the one hand, a closed environment may be provided for the object to be inspected (for example, the human body or article); on the other hand, it may be convenient for the object to enter and exit the inspecting region 18. In the conventional millimeter wave human body security inspection apparatus, the human to be inspected must forwardly enter the apparatus, is scanned sideways and then turns around to exit the apparatus. In contrast, by providing the first door device 51 and the second door device 52, when the human body receives the security inspection, the human to be inspected only needs to forwardly enter the inspecting region and forwardly exit the inspecting region without turning his body back, so as to simplify the security inspection process.

In an example, at least one of the first door device 51 and the second door device 52 includes: a slidable door panel 61, 62 which is slidable with respect to the housing 1; and a driving device 70 for the slidable door panel configured to drive the slidable door panel 61, 62 to slide such that the passage is opened to allow the object to enter and exit the inspecting region 18 before the first millimeter wave transceiver module and the second millimeter wave transceiver module begin to scan and after they stop scanning and the passage is closed when the first millimeter wave transceiver module and the second millimeter wave transceiver module are scanning.

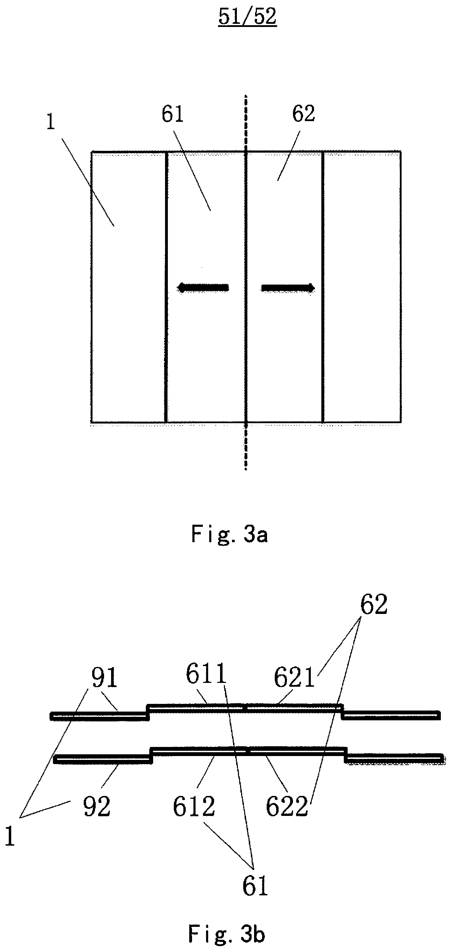

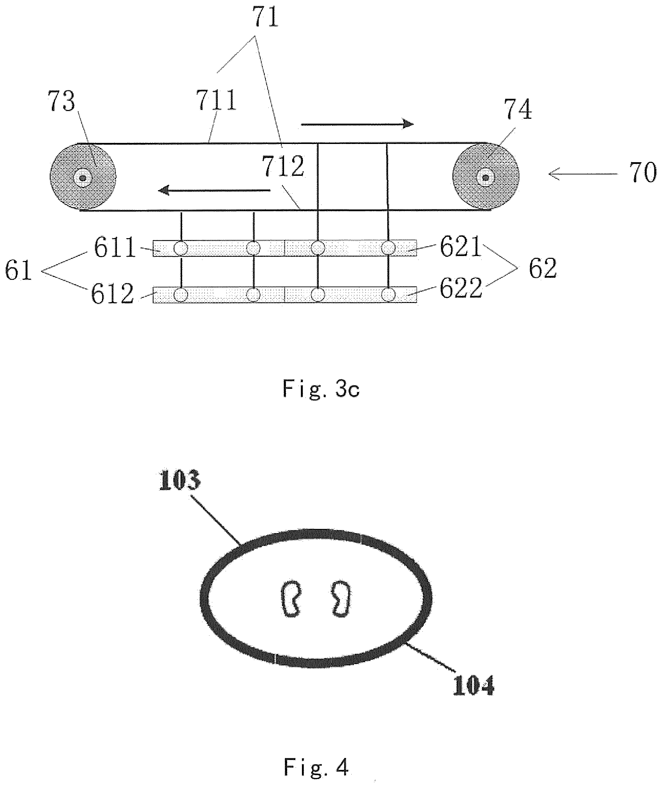

As shown in Figure 3a to Figure 3c, at least one of the first door device 51 and the second door device 52 includes: a first slidable door panel 61 and a second slidable door panel 62 which are slidable with respect to the housing 1 in opposite directions to each other; a door panel sliding belt 71 having a first belt portion 711 and a second belt portion 712 which are movable in opposite directions, the first belt portion 711 and the second belt portion 712 being connected to the first slidable door panel 61 and the second slidable door panel 62 respectively and configured to drive the first slidable door panel 61 and the second slidable door panel 62 to slide in opposite directions; a first pulley 73 and a second pulley 74 engaged with the door panel sliding belt 71 to drive the door panel sliding belt 71 to move, the first belt portion 711 and the second belt portion 712 being arranged on both sides of any one of the first pulley 73 and the second pulley 74 respectively; and a driving motor configured to drive at least one of the first pulley 73 and the second pulley 74 to rotate.

As an example, when the first millimeter wave transceiver module and the second millimeter wave transceiver module do not scan, each of the first slidable door panel 61 and the second slidable door panel 62 is located at inside of the portion of the housing 1 adjacent to it respectively, to open the passage for the object entering and exiting the inspecting region 18. After preparation of operation of the first millimeter wave transceiver module and the second millimeter wave transceiver module has been completed, the driving motor drives the first pulley 73 and the second pulley 74 and the first slidable door panel 61 and the second slidable door panel 62 are driven by the door panel sliding belt 71 to move towards the left and the right respectively, so as to close the passage. After the scanning ends, the first slidable door panel 61 and the second slidable door panel 62 are opened again and the direction in which they are opened is opposite to the direction in which they are closed.

In an example, the housing 1 may have a first housing wall 91 and a second housing wall 92. Scanning passages of the first millimeter wave transceiver module 101 and the second millimeter wave transceiver module 102 are defined between the first housing wall 91 and the second housing wall 92. Each of the door panels 61, 62 has a first door panel wall 611, 621 and a second door panel wall 612, 622. And at least one of the first millimeter wave transceiver module 101 and the second millimeter wave transceiver module 102 is configured to scan along the first door panel wall 611, 621 and the second door panel wall 612, 622.

The above structures with the double-layer wall of the housing 1 and the slidable door panels 61, 62 can cause the first millimeter wave transceiver antenna array 11 and the second millimeter wave transceiver antenna array 12 to scan in a substantially closed passage. It may prevent the object (such as the person) to be inspected from contacting with the millimeter wave transceiver antennas and may also prevent the person to be inspected from being dazzled due to fast scanning speed of the first millimeter wave transceiver antenna array 11 and the second millimeter wave transceiver antenna array 12.

In an example, the first housing wall 91 is closer to the inspecting region 18 than the second housing wall 92 and the first door panel wall 611, 621 are closer to the inspecting region 18 than the second door panel wall 612, 622. The first housing wall 91 and the first door panel wall 611, 621 are at least partly transparent to millimeter waves used by the first millimeter wave transceiver module and the second millimeter wave transceiver module. It may reduce the attenuation of millimeter wave signals. As an example, the first housing wall 91 and the first door panel wall 611, 621 may be made from polyethylene material.

As an example, the door panel sliding belt 71 may be a known member in the art that can achieve the above transmission function such as a leather belt, a cable. In an example, for the sake of convenience of inspection, a waiting region 17 in which the object waits for inspection may be provided at the outside of the first door device 51 and a decision region 19 may be arranged at the outside of the second door device 52. In the decision region 19, the object to be inspected may also be checked manually to verify the checking results.

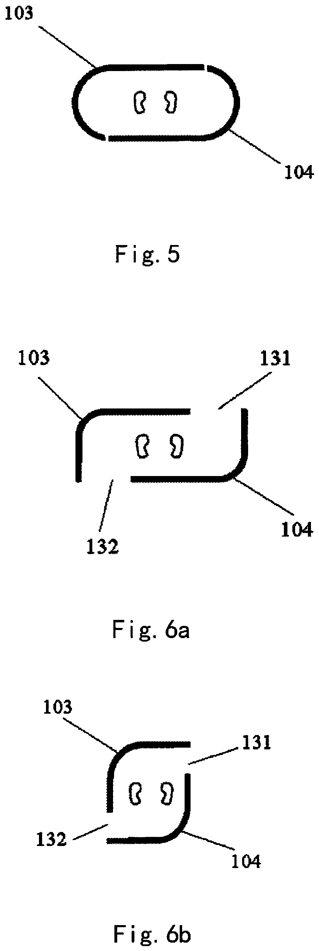

In the above embodiment, the millimeter wave three dimensional holographic scan imaging apparatus according to an embodiment of the present invention has been explained with reference to the L-shaped scanning track. However, the embodiments of the present invention are not limited to this. For example, the above scanning track of the first millimeter wave transceiver module and the above scanning track of the second millimeter wave transceiver module may be an elliptic arc track (for example, as shown in Figure 4) or a track formed by a combination of a linear line and a circular arc (for example, as shown in Figure 5). In the example shown in Figure 4, the first guide rail device 103 and the second guide rail device 104 have elliptic arc shapes respectively and they are combined to surround the four sides of the region occupied by the object (as indicated by footprints shown in Figure 4). In the example shown in Figure 5, each of the first guide rail device 103 and the second guide rail device 104 is a track formed by a combination of a linear line track and a circular arc track. For example, the linear line track is used for scanning the front face of the object (for example the human body) to be inspected and the circular arc track is used for scanning the side face of the object (for example the human body) to be inspected.

In another example, a passage 131 or 132 for entrance and exit of the object may also be provided between the first guide rail device 103 and the second guide rail device 104, as shown in Figure 6a or 6b. The passage 131 or 132 may be arranged at positions that do not face the object to be inspected to avoid obstructing the complete scan of various sides of the object by the first millimeter wave transceiver module and the second millimeter wave transceiver module.

Although the above embodiments of the present invention have been explained with reference to two millimeter wave transceiver modules, the embodiments of the present invention are not limited to the two millimeter wave transceiver modules. More millimeter wave transceiver modules may also be used to scan the object to be inspected, for example, each side of the object to be inspected may be scanned by one millimeter wave transceiver module.

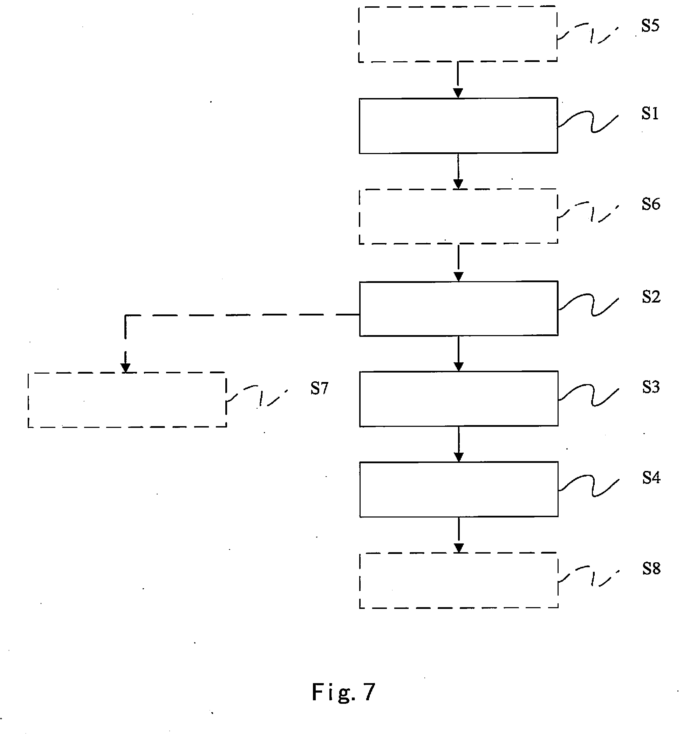

The present application also provides a method for inspecting a human body or an article using a millimeter wave three dimensional holographic scan imaging apparatus, as illustrated in Figure 7 (The steps indicated by dashed blocks in Figure 7 are optional steps). The method includes:
Step S1: arranging the human body or the article to enter an inspecting region and locating a first millimeter wave transceiver module and a second millimeter wave transceiver module at their scan beginning positions respectively;
Step S2: driving the first millimeter wave transceiver module and the second millimeter wave transceiver module by a driver to move from their scan beginning positions to their scan end positions along a first guide rail device and a second guide rail device respectively to scan four sides of the human body or the article, so as to acquire holographic data of four planes;
Step S3: transmitting the holographic data of the four planes acquired by the first millimeter wave transceiver module and the second millimeter wave transceiver module during scanning to a data processing device, in the scanning and/or after the scanning; and
Step S4: reconstructing the holographic data of the four planes using the data processing device to generate a millimeter wave holographic image/millimeter wave holographic images of the human body or the article.

The first guide rail device extends at least along the first side and the second side of the object and the second guide rail device extends at least along the third side and the fourth side of the object.

As discussed above, by means of such a method for inspecting a human body or an article, all of the sides of the human body or article may be imaged and inspected conveniently and rapidly in full field of view.

In an example, the method may further include:
Step S5: opening a first door device and a second door device of the millimeter wave three dimensional holographic scan imaging apparatus, before the human body or the article enters the inspecting region; and
Step S6: closing the first door device and the second door device after the human body or the article enters the inspecting region and before the first millimeter wave transceiver module and the second millimeter wave transceiver module begin to scan.

By providing the first door device and the second door device, the human body or article can enter or exit the inspecting region fast. It is very advantageous to person security inspection at crowded places such as airports, rail stations.

In an example, the method may further include:
Step S7: after the first millimeter wave transceiver module and the second millimeter wave transceiver module stop scanning, opening the first door device and the second door device of the millimeter wave three dimensional holographic scan imaging apparatus and moving the human body or the article out of the inspecting region.

As an example, the method may further include:
Step S8: after generating the millimeter wave holographic image(s) of the human body or the article, identifying whether the human body or the article entrains suspected objects and identifying the position of the suspected objects and outputting the identified results.

In the above step S8, the identification on the suspected objects and their position may be implemented by a computer automatic identification or manual identification or a combination of the both. The operation of outputting the results may be implemented for example by displaying a doll figure marked with suspected areas on a display device 109 or displaying the conclusion on whether there are suspected objects directly, or the inspection results may also be printed directly or sent.

The security inspection personnel for performing inspection may verify whether the human body or the article entrains suspected objects and verify the positions of the suspected objects from the inspection results given by the above step S8, or may verify them by manual check.

Figure 4 shows a flow chart including the above steps S1 to S8. The steps S5, S6, S7 and S8 are optional steps of the method for inspecting the human body or article using a millimeter wave three dimensional holographic scan imaging apparatus according to the embodiment of the present invention.

The method for inspecting the human body or article using a millimeter wave three dimensional holographic scan imaging apparatus according to the embodiment of the present invention is helpful to determine the suspected objects fast and prevent security risk, which is in particular beneficial to applications that need to determine security risk fast such as in airports, customs.

## Claims

1. A millimeter wave three dimensional holographic scan imaging apparatus(100), including:
a first millimeter wave transceiver module including a first millimeter wave transceiver antenna array (11) for transmitting and receiving a first millimeter wave signal and a first millimeter wave transceiver (101) associated with the first millimeter wave transceiver antenna array (11);
a second millimeter wave transceiver module comprising a second millimeter wave transceiver antenna array (12) for transmitting and receiving a second millimeter wave signal and a second millimeter wave transceiver (102) associated with the second millimeter wave transceiver antenna array (12);
a first guide rail device (103), to which the first millimeter wave transceiver module is connected, such that the first millimeter wave transceiver module is moveable in a first scanning track along the first guide rail device (103);
a second guide rail device (104), to which the second millimeter wave transceiver module is connected, such that the second millimeter wave transceiver module is moveable in a second scanning track along the second guide rail device (104); and
a driver (30) configured to drive the first millimeter wave transceiver module to move along the first guide rail device (103) and to drive the second millimeter wave transceiver module to move along the second guide rail device (104),
**characterized in that**,
the millimeter wave three dimensional holographic scan imaging apparatus(100) further comprises a housing (1) configured to surround an inspecting region (18) in which an object to be inspected is located in inspection;
the housing (1) has a first door device (51) and a second door device (52), and a passage for the object to enter and to exit the inspecting region (18) is provided between the first door device (51) and the second door device (52);
the first millimeter wave transceiver module is connected to the first guide rail device (103) in a slidable form, such that the first millimeter wave transceiver module is moveable in the first scanning track along the first guide rail device (103) to scan a first side (21) and a second side (22) of the object;
the second millimeter wave transceiver module is connected to the second guide rail device (104) in a slidable form, such that the second millimeter wave transceiver module is moveable in the second scanning track along the second guide rail device (104) to scan a third side (23) and a fourth side (24) of the object, the third side (23) of the object being opposite the first side (21) of the object and the fourth side (24) of the object being opposite the second side (22) of the object;
wherein
the first guide rail device (103) extends at least along the first side (21) and the second side (22) of the object, the second guide rail device (104) extends at least along the third side (23) and the fourth side (24) of the object;
the first scanning track and the second scanning track are combined to form a closed track surrounding the object; and
the first door device (51) and the second door device (52) are arranged at two opposite sides of the inspecting region (18), wherein the first guide rail device (103) extends along a top of the second door device (52) and the second guide rail device (104) extends along a top of the first door device (51).

2. The millimeter wave three dimensional holographic scan imaging apparatus (100) of claim 1, **characterized in that** scan direction of each of the first millimeter wave transceiver module and the second millimeter wave transceiver module is a horizontal direction and each of the first millimeter wave transceiver antenna array (11) and the second millimeter wave transceiver antenna array (12) extends vertically.

3. The millimeter wave three dimensional holographic scan imaging apparatus (100) of claim 1, **characterized in that** the scan direction of the first millimeter wave transceiver module is opposite to the scan direction of the second millimeter wave transceiver module.

4. The millimeter wave three dimensional holographic scan imaging apparatus (100) of claim 1, **characterized in that** each of the first scanning track and the second scanning track is an L-shaped track, an elliptic arc track or a track formed by a combination of a linear line and a circular arc.

5. The millimeter wave three dimensional holographic scan imaging apparatus (100) of claim 1, **characterized in that** a passage for entrance and exit of the object is provided between the first guide rail device (103) and the second guide rail device (104).

6. The millimeter wave three dimensional holographic scan imaging apparatus (100) of claim 1, **characterized in that** the driver (30) comprises:
one or more driving wheel (31, 32, 33, 34);
one or more transmission belt (35) engaged with the driving wheel (31, 32, 33, 34) to be driven by the driving wheel (31, 32, 33, 34) to move; and
a first sliding base (36) and a second sliding base (37) connected to the first millimeter wave transceiver module and the second millimeter wave transceiver module respectively and mounted on a same transmission belt (35) or on different transmission belts (35) respectively.

7. The millimeter wave three dimensional holographic scan imaging apparatus (100) of claim 1, **characterized in that** at least one of the first door device (51) and the second door device (52) comprises:
a slidable door panel (61, 62) which is slidable with respect to the housing (1);
a driving device (70) for the slidable door panel (61, 62) configured to drive the slidable door panel to slide such that the passage is opened before the first millimeter wave transceiver module and the second millimeter wave transceiver module begin to scan and after they stop to scan, and the passage is closed when the first millimeter wave transceiver module and the second millimeter wave transceiver module are scanning.

8. The millimeter wave three dimensional holographic scan imaging apparatus (100) of claim 1, **characterized in that** at least one of the first door device (51) and the second door device (52) comprises:
a first slidable door panel (61) and a second slidable door panel (62) which are slidable with respect to the housing (1) in opposite directions to each other;
a door panel sliding belt (71) having a first belt portion (711) and a second belt portion (712) which are movable in opposite directions, the first belt portion (711) and the second belt portion (712) being connected to the first slidable door panel (61) and the second slidable door panel (62) respectively and configured to drive the first slidable door panel (61) and the second slidable door panel (62) to slide in opposite directions;
a first pulley (73) and a second pulley (74) engaged with the door panel sliding belt (71) to drive the door panel sliding belt (71) to move, the first belt portion (711) and the second belt portion (712) being arranged on both sides of any one of the first pulley (73) and the second pulley (74) respectively; and
a driving motor configured to drive at least one of the first pulley (73) and the second pulley (74) to rotate.

9. The millimeter wave three dimensional holographic scan imaging apparatus (100) of any one of claims 1, 7 and 8, **characterized in that** the housing (1) has a first housing wall (91) and a second housing wall (92), wherein scanning passages of the first millimeter wave transceiver module and the second millimeter wave transceiver module are defined between the first housing wall (91) and the second housing wall (92) and each of the door panel (61, 62) has a first door panel wall (611, 621) and a second door panel wall (612, 622), and at least one of the first millimeter wave transceiver module and the second millimeter wave transceiver module is configured to scan along the first door panel wall (611, 621) and the second door panel wall (612, 622).

10. The millimeter wave three dimensional holographic scan imaging apparatus (100) of claim 9, **characterized in that** the first housing wall (91) is closer to the inspecting region (18) than the second housing wall (92) and the first door panel wall (611, 621) is closer to the inspecting region (18) than the second door panel wall (612, 622), wherein the first housing wall (91) and the first door panel wall (611, 621) are at least partly transparent to millimeter wave used by the first millimeter wave transceiver module and the second millimeter wave transceiver module.

11. The millimeter wave three dimensional holographic scan imaging apparatus (100) of any one of claims 1-8, further comprising:
a data processing device (107) connected by wireless or wires to the first millimeter wave transceiver module and/or the second millimeter wave transceiver module to receive scanning data of four sides of the object from the first millimeter wave transceiver module and/or the second millimeter wave transceiver module and generate a millimeter wave holographic image/millimeter wave holographic images; and
a display device (109) connected to the data processing device (107) and configured to receive and display the millimeter wave holographic image/images from the data processing device (107).

12. A method for inspecting a human body or an article using a millimeter wave three dimensional holographic scan imaging apparatus, comprising:
arranging the human body or the article to enter an inspecting region and locating a first millimeter wave transceiver module and a second millimeter wave transceiver module at their scan beginning positions respectively;
driving the first millimeter wave transceiver module and the second millimeter wave transceiver module by a driver to move from their scan beginning positions to their scan end positions along a first guide rail device and a second guide rail device respectively to scan the human body or the article, so as to acquire holographic data;
transmitting the holographic data acquired by the first millimeter wave transceiver module and the second millimeter wave transceiver module during scanning to a data processing device, in the scanning and/or after the scanning; and
reconstructing the holographic data using the data processing device to generate a millimeter wave holographic image/millimeter wave holographic images of the human body or the article;
**characterized in that**,
the first millimeter wave transceiver module and the second millimeter wave transceiver module are driven by the driver to move from their scan beginning positions to their scan end positions along the first guide rail device and the second guide rail device respectively to scan four sides of the human body or the article, so as to acquire the holographic data of four planes;
the millimeter wave three dimensional holographic scan imaging apparatus further comprises a housing configured to surround the inspecting region;
the housing has a first door device and a second door device, and a passage for the human body or the article to enter and to exit the inspecting region is provided between the first door device and the second door device;
wherein
the first guide rail device extends at least along a first side and a second side of the human body or the article, and the second guide rail device extends at least along a third side and a fourth side of the human body or the article, the third side being opposite the first side and the fourth side being opposite the second side;
the first scanning track and the second scanning track are combined to form a closed track surrounding the object; and
the first door device and the second door device are arranged at two opposite sides of the inspecting region, wherein the first guide rail device extends along a top of the second door device and the second guide rail device extends along a top of the first door device.

13. The method of claim 12, further comprising:
opening the first door device and the second door device of the millimeter wave three dimensional holographic scan imaging apparatus, before the human body or the article enters the inspecting region; and
closing the first door device and the second door device after the human body or the article enters the inspecting region and before the first millimeter wave transceiver module and the second millimeter wave transceiver module begin to scan.

## Patentansprüche

1. Millimeterwellen-Bildgebungsgerät (100) für dreidimensionale holografische Abtastungen, beinhaltend:
ein erstes Millimeterwellen-Sendeempfängermodul, das eine erste Millimeterwellen-Sendeempfänger-Antennengruppe (11) zum Senden und Empfangen eines ersten Millimeterwellen-Signals und einen ersten Millimeterwellen-Sendeempfänger (101) beinhaltet, welcher der ersten Millimeterwellen-Sendeempfänger-Antennengruppe (11) zugeordnet ist,
ein zweites Millimeterwellen-Sendeempfängermodul, das eine zweite Millimeterwellen-Sendeempfänger-Antennengruppe (12) zum Senden und Empfangen eines zweiten Millimeterwellensignals und einen zweiten Millimeterwellen-Sendeempfänger (102) beinhaltet, welcher der zweiten Millimeterwellen-Sendeempfänger-Antennengruppe (12) zugeordnet ist,
eine erste Führungsschienenvorrichtung (103), mit der das erste Millimeterwellen-Sendeempfängermodul derart verbunden ist, dass das erste Millimeterwellen-Sendeempfängermodul in einer ersten Abtastspur entlang der ersten Führungsschienenvorrichtung (103) bewegbar ist,
eine zweite Führungsschienenvorrichtung (104), mit der das zweite Millimeterwellen-Sendeempfängermodul derart verbunden ist, dass das zweite Millimeterwellen-Sendeempfängermodul in einer zweiten Abtastspur entlang der zweiten Führungsschienenvorrichtung (104) bewegbar ist, und
einen Antrieb (30), der dazu ausgestaltet ist, das erste Millimeterwellen-Sendeempfängermodul anzutreiben, sich entlang der ersten Führungsschienenvorrichtung (103) zu bewegen, und das zweite Millimeterwellen-Sendeempfängermodul anzutreiben, sich entlang der zweiten Führungsschienenvorrichtung (104) zu bewegen,
**dadurch gekennzeichnet, dass**
das Millimeterwellen-Bildgebungsgerät (100) für dreidimensionale holografische Abtastungen ferner ein Gehäuse (1) umfasst, das dazu ausgestaltet ist, einen Kontrollbereich (18) zu umgeben, in dem sich bei der Kontrolle ein zu kontrollierender Gegenstand befindet,
das Gehäuse (1) eine erste Türvorrichtung (51) und eine zweite Türvorrichtung (52) aufweist und zwischen der ersten Türvorrichtung (51) und der zweiten Türvorrichtung (52) ein Durchgang für den Gegenstand vorgesehen ist, um in den Kontrollbereich (18) hinein und aus diesem heraus zu gelangen,
das erste Millimeterwellen-Sendeempfängermodul mit der ersten Führungsschienenvorrichtung (103) in einer verschiebbaren Weise derart verbunden ist, dass das erste Millimeterwellen-Sendeempfängermodul in der ersten Abtastspur entlang der ersten Führungsschienenvorrichtung (103) bewegbar ist, um eine erste Seite (21) und eine zweite Seite (22) des Gegenstandes abzutasten,
das zweite Millimeterwellen-Sendeempfängermodul mit der zweiten Führungsschienenvorrichtung (104) in einer verschiebbaren Weise derart verbunden ist, dass das zweite Millimeterwellen-Sendeempfängermodul in der zweiten Abtastspur entlang der zweiten Führungsschienenvorrichtung (104) bewegbar ist, um eine dritte Seite (23) und eine vierte Seite (24) des Gegenstandes abzutasten, wobei die dritte Seite (23) des Gegenstandes gegenüber der ersten Seite (21) des Gegenstandes liegt und die vierte Seite (24) des Gegenstandes gegenüber der zweiten Seite (22) des Gegenstandes liegt,
wobei
die erste Führungsschienenvorrichtung (103) sich zumindest entlang der ersten Seite (21) und der zweiten Seite (22) des Gegenstandes erstreckt, die zweite Führungsschienenvorrichtung (104) sich zumindest entlang der dritten Seite (23) und der vierten Seite (24) des Gegenstandes erstreckt,
die erste Abtastspur und die zweite Abtastspur kombiniert werden, um eine geschlossene Spur zu bilden, die den Gegenstand umgibt, und
die erste Türvorrichtung (51) und die zweite Türvorrichtung (52) an zwei gegenüberliegenden Seiten des Kontrollbereichs (18) angeordnet sind, wobei die erste Führungsschienenvorrichtung (103) sich entlang einer Oberseite der zweiten Türvorrichtung (52) erstreckt und die zweite Führungsschienenvorrichtung (104) sich entlang einer Oberseite der ersten Türvorrichtung (51) erstreckt.

2. Millimeterwellen-Bildgebungsgerät (100) für dreidimensionale holografische Abtastungen nach Anspruch 1, **dadurch gekennzeichnet, dass** die Abtastrichtung jedes des ersten Millimeterwellen-Sendeempfängermoduls und des zweiten Millimeterwellen-Sendeempfängermoduls eine horizontale Richtung ist und jede der ersten Millimeterwellen-Sendeempfänger-Antennengruppe (11) und der zweiten Millimeterwellen-Sendeempfänger-Antennengruppe (12) sich vertikal erstreckt.

3. Millimeterwellen-Bildgebungsgerät (100) für dreidimensionale holografische Abtastungen nach Anspruch 1, **dadurch gekennzeichnet, dass** die Abtastrichtung des ersten Millimeterwellen-Sendeempfängermoduls der Abtastrichtung des zweiten Millimeterwellen-Sendeempfängermoduls entgegengesetzt ist.

4. Millimeterwellen-Bildgebungsgerät (100) für dreidimensionale holografische Abtastungen nach Anspruch 1, **dadurch gekennzeichnet, dass** jede der ersten Abtastspur und der zweiten Abtastspur eine L-förmige Spur, eine elliptische Bogenspur oder eine Spur ist, die durch eine Kombination einer geraden Linie und eines Kreisbogens gebildet wird.

5. Millimeterwellen-Bildgebungsgerät (100) für dreidimensionale holografische Abtastungen nach Anspruch 1, **dadurch gekennzeichnet, dass** zwischen der ersten Führungsschienenvorrichtung (103) und der zweiten Führungsschienenvorrichtung (104) ein Durchgang zum Hineingelangen und Herausgelangen des Gegenstandes vorgesehen ist.

6. Millimeterwellen-Bildgebungsgerät (100) für dreidimensionale holografische Abtastungen nach Anspruch 1, **dadurch gekennzeichnet, dass** der Antrieb (30) umfasst:
ein oder mehrere Antriebsräder (31, 32, 33, 34),
einen oder mehrere Treibriemen (35), die mit dem Antriebsrad (31, 32, 33, 34) in Eingriff stehen, um durch das Antriebsrad (31, 32, 33, 34) angetrieben zu werden, um sich zu bewegen, und
ein erstes verschiebbares Grundelement (36) und ein zweites verschiebbares Grundelement (37), die mit dem ersten Millimeterwellen-Sendeempfängermodul bzw. dem zweiten Millimeterwellen-Sendeempfängermodul verbunden und an einem gleichen Treibriemen (35) bzw. an unterschiedlichen Treibriemen (35) montiert sind.

7. Millimeterwellen-Bildgebungsgerät (100) für dreidimensionale holografische Abtastungen nach Anspruch 1, **dadurch gekennzeichnet, dass** mindestens eine von der ersten Türvorrichtung (51) und der zweiten Türvorrichtung (52) umfasst:
eine verschiebbare Türplatte (61, 62), die in Bezug auf das Gehäuse (1) verschiebbar ist,
eine Antriebsvorrichtung (70) für die verschiebbare Türplatte (61, 62), die dazu ausgestaltet ist, die verschiebbare Türplatte anzutreiben, sich derart zu verschieben, dass der Durchgang geöffnet ist, bevor das erste Millimeterwellen-Sendeempfängermodul und das zweite Millimeterwellen-Sendeempfängermodul mit dem Abtasten beginnen und nachdem sie das Abtasten beenden, und der Durchgang geschlossen ist, wenn das erste Millimeterwellen-Sendeempfängermodul und das zweite Millimeterwellen-Sendeempfängermodul abtasten.

8. Millimeterwellen-Bildgebungsgerät (100) für dreidimensionale holografische Abtastungen nach Anspruch 1, **dadurch gekennzeichnet, dass** mindestens eine von der ersten Türvorrichtung (51) und der zweiten Türvorrichtung (52) umfasst:
eine erste verschiebbare Türplatte (61) und eine zweite verschiebbare Türplatte (62), die bezüglich des Gehäuses (1) in zueinander entgegengesetzten Richtungen verschiebbar sind,
einen Türplatten-Verschiebungsriemen (71), der eine erste Riemensektion (711) und eine zweite Riemensektion (712) aufweist, die in entgegengesetzten Richtungen bewegbar sind, wobei die erste Riemensektion (711) und die zweite Riemensektion (712) mit der ersten verschiebbaren Türplatte (61) bzw. der zweiten verschiebbaren Türplatte (62) verbunden und dazu ausgestaltet sind, die erste verschiebbare Türplatte (61) und die zweite verschiebbare Türplatte (62) anzutreiben, sich in entgegengesetzte Richtungen zu verschieben,
eine erste Riemenscheibe (73) und eine zweite Riemenscheibe (74), die mit dem Türplatten-Verschiebungsriemen (71) in Eingriff stehen, um den Türplatten-Verschiebungsriemen (71) zum Bewegen anzutreiben, wobei die erste Riemensektion (711) und die zweite Riemensektion (712) auf beiden Seiten einer von der ersten Riemenscheibe (73) bzw. der zweiten Riemenscheibe (74) angeordnet sind, und
einen Antriebsmotor, der dazu ausgestaltet ist, mindestens eine von der ersten Riemenscheibe (73) und der zweiten Riemenscheibe (74) zum Drehen anzutreiben.

9. Millimeterwellen-Bildgebungsgerät (100) für dreidimensionale holografische Abtastungen nach einem der Ansprüche 1, 7 und 8, **dadurch gekennzeichnet, dass** das Gehäuse (1) eine erste Gehäusewand (91) und eine zweite Gehäusewand (92) aufweist, wobei Abtastdurchgänge des ersten Millimeterwellen-Sendeempfängermoduls und des zweiten Millimeterwellen-Sendeempfängermoduls zwischen der ersten Gehäusewand (91) und der zweiten Gehäusewand (92) definiert sind und jede der Türplatten (61, 62) eine erste Türplattenwand (611, 621) und eine zweite Türplattenwand (612, 622) aufweist, und mindestens eines von dem ersten Millimeterwellen-Sendeempfängermoduls und dem zweiten Millimeterwellen-Sendeempfängermoduls dazu ausgestaltet ist, entlang der ersten Türplattenwand (611, 621) und der zweiten Türplattenwand (612, 622) abzutasten.

10. Millimeterwellen-Bildgebungsgerät (100) für dreidimensionale holografische Abtastungen nach Anspruch 9, **dadurch gekennzeichnet, dass** die erste Gehäusewand (91) näher an dem Kontrollbereich (18) als die zweite Gehäusewand (92) ist und die erste Türplattenwand (611, 621) näher an dem Kontrollbereich (18) als die zweite Türplattenwand (612, 622) ist, wobei die erste Gehäusewand (91) und die erste Türplattenwand (611, 621) zumindest teilweise für Millimeterwellen transparent sind, die von dem ersten Millimeterwellen-Sendeempfängermodul und dem zweiten Millimeterwellen-Sendeempfängermodul verwendet werden.

11. Millimeterwellen-Bildgebungsgerät (100) für dreidimensionale holografische Abtastungen nach einem der Ansprüche 1-8, ferner umfassend:
eine Datenverarbeitungsvorrichtung (107), die drahtlos oder drahtgebunden mit dem ersten Millimeterwellen-Sendeempfängermodul und/oder dem zweiten Millimeterwellen-Sendeempfängermodul verbunden ist, um Abtastdaten von vier Seiten des Gegenstandes von dem ersten Millimeterwellen-Sendeempfängermodul und/oder dem zweiten Millimeterwellen-Sendeempfängermodul zu empfangen und ein holografisches Millimeterwellenbild/holografische Millimeterwellenbilder zu erzeugen, und
eine Anzeigevorrichtung (109), die mit der Datenverarbeitungsvorrichtung (107) verbunden und dazu ausgestaltet ist, das holografische Millimeterwellenbild/die holografischen Millimeterwellenbilder von der Datenverarbeitungsvorrichtung (107) zu empfangen und anzuzeigen.

12. Verfahren zum Kontrollieren eines menschlichen Körpers oder eines Artikels unter Verwendung eines Millimeterwellen-Bildgebungsgeräts für dreidimensionale holografische Abtastungen, umfassend:
Anordnen des menschlichen Körpers oder des Artikels, um in einen Kontrollbereich hineinzugelangen, und Platzieren eines ersten Millimeterwellen-Sendeempfängermoduls bzw. eines zweiten Millimeterwellen-Sendeempfängermoduls an ihren Abtastanfangspositionen,
Antreiben des ersten Millimeterwellen-Sendeempfängermoduls und des zweiten Millimeterwellen-Sendeempfängermoduls durch einen Antrieb, um sie entlang einer ersten Führungsschienenvorrichtung bzw. einer zweiten Führungsschienenvorrichtung von ihren Abtastanfangspositionen zu ihren Abtastendpositionen zu bewegen, um den menschlichen Körper oder den Artikel abzutasten, um dadurch holografische Daten zu erfassen,
Übertragen der holografischen Daten, die von dem ersten Millimeterwellen-Sendeempfängermodul und dem zweiten Millimeterwellen-Sendeempfängermodul während des Abtastens erfasst wurden, an eine Datenverarbeitungsvorrichtung beim Abtasten und/oder nach dem Abtasten, und
Rekonstruieren der holografischen Daten unter Verwendung der Datenverarbeitungsvorrichtung, um ein holografisches Millimeterwellenbild/holografische Millimeterwellenbilder des menschlichen Körpers oder des Artikels zu erzeugen,
**dadurch gekennzeichnet, dass**
das erste Millimeterwellen-Sendeempfängermodul und das zweite Millimeterwellen-Sendeempfängermodul von dem Antrieb angetrieben werden, um sich von ihren Abtastanfangspositionen zu ihren Abtastendpositionen entlang der ersten Führungsschienenvorrichtung bzw. der zweiten Führungsschienenvorrichtung zu bewegen, um vier Seiten des menschlichen Körpers oder Artikels abzutasten, um dadurch die holografischen Daten von vier Ebenen zu erfassen,
das Millimeterwellen-Bildgebungsgerät für dreidimensionale holografische Abtastungen ferner ein Gehäuse umfasst, das dazu ausgestaltet ist, den Kontrollbereich zu umgeben,
das Gehäuse eine erste Türvorrichtung und eine zweite Türvorrichtung aufweist, und zwischen der ersten Türvorrichtung und der zweiten Türvorrichtung ein Durchgang für den menschlichen Körper oder den Artikel vorgesehen ist, um in den Kontrollbereich hinein und aus diesem heraus zu gelangen,
wobei
die erste Führungsschienenvorrichtung sich zumindest entlang einer ersten Seite und einer zweiten Seite des menschlichen Körpers oder des Artikels erstreckt und die zweite Führungsschienenvorrichtung sich zumindest entlang einer dritten Seite und einer vierten Seite des menschlichen Körpers oder des Artikels erstreckt, wobei die dritte Seite gegenüber der ersten Seite liegt und die vierte Seite gegenüber der zweiten Seite liegt,
die erste Abtastspur und die zweite Abtastspur kombiniert werden, um eine geschlossene Spur zu bilden, die den Gegenstand umgibt, und
die erste Türvorrichtung und die zweite Türvorrichtung an zwei gegenüberliegenden Seiten des Kontrollbereichs angeordnet sind, wobei die erste Führungsschienenvorrichtung sich entlang einer Oberseite der zweiten Türvorrichtung erstreckt und die zweite Führungsschienenvorrichtung sich entlang einer Oberseite der ersten Türvorrichtung erstreckt.

13. Verfahren nach Anspruch 12, ferner umfassend:
Öffnen der ersten Türvorrichtung und der zweiten Türvorrichtung des Millimeterwellen-Bildgebungsgeräts für dreidimensionale holografische Abtastungen, bevor der menschliche Körper oder der Artikel in den Kontrollbereich hinein gelangt, und
Schließen der ersten Türvorrichtung und der zweiten Türvorrichtung, nachdem der menschliche Körper oder der Artikel in den Kontrollbereich hinein gelangt ist und bevor das erste Millimeterwellen-Sendeempfängermodul und das zweite Millimeterwellen-Sendeempfängermodul mit dem Abtasten beginnen.

## Revendications

1. Appareil d'imagerie de balayage holographique tridimensionnelle à ondes millimétriques (100), incluant
un premier module émetteur-récepteur à ondes millimétriques incluant un premier réseau d'antennes d'émetteur-récepteur à ondes millimétriques (11) pour émettre et recevoir un premier signal à ondes millimétriques et un premier émetteur-récepteur à ondes millimétriques (101) associé au premier réseau d'antennes d'émetteur-récepteur à ondes millimétriques (11) ;
un second module émetteur-récepteur à ondes millimétriques comprenant un second réseau d'antennes d'émetteur-récepteur à ondes millimétriques (12) pour émettre et recevoir un second signal à ondes millimétriques et un second émetteur-récepteur à ondes millimétriques (102) associé au second réseau d'antennes d'émetteur-récepteur à ondes millimétriques (12) ;
un premier dispositif de rail guide (103), auquel le premier module émetteur-récepteur à ondes millimétriques est relié, tel que le premier module émetteur-récepteur à ondes millimétriques puisse être déplacé sur une première piste de balayage le long du premier dispositif de rail guide (103) ;
un second dispositif de rail guide (104), auquel le second module émetteur-récepteur à ondes millimétriques est relié, tel que le second module émetteur-récepteur à ondes millimétriques puisse être déplacé sur une seconde piste de balayage le long du second dispositif de rail guide (104) ; et
un entraînement (30) configuré pour entraîner le premier module émetteur-récepteur à ondes millimétriques afin de se déplacer le long du premier dispositif de rail guide (103), et pour entraîner le second module émetteur-récepteur à ondes millimétriques afin de se déplacer le long du second dispositif de rail guide (104),
**caractérisé en ce que**
l'appareil d'imagerie de balayage holographique tridimensionnelle à ondes millimétriques (100) comprend en outre un logement (1) configuré pour entourer une région d'inspection (18) dans laquelle un objet à inspecter est situé sous inspection ;
le logement (1) présente un premier dispositif de porte (51) et un second dispositif de porte (52), et un passage pour que l'objet entre et sorte de la région d'inspection (18) est prévu entre le premier dispositif de porte (51) et le second dispositif de porte (52) ;
le premier module émetteur-récepteur à ondes millimétriques est relié au premier dispositif de rail guide (103) sous une forme coulissante, de sorte que le premier module émetteur-récepteur à ondes millimétriques puisse être déplacé sur la première piste de balayage le long du premier dispositif de rail guide (103) pour balayer un premier côté (21) et un deuxième côté (22) de l'objet ;
le second module émetteur-récepteur à ondes millimétriques est relié au second dispositif de rail guide (104) sous une forme coulissante, de sorte que le second module émetteur-récepteur à ondes millimétriques puisse être déplacé sur la seconde piste de balayage le long du second dispositif de rail guide (104) pour balayer un troisième côté (23) et un quatrième côté (24) de l'objet, le troisième côté (23) de l'objet étant opposé au premier côté (21) de l'objet et le quatrième côté (24) de l'objet étant opposé au deuxième côté (22) de l'objet ;
dans lequel
le premier dispositif de rail guide (103) s'étend au moins le long du premier côté (21) et du deuxième côté (22) de l'objet, le second dispositif de rail guide (104) s'étend au moins le long du troisième côté (23) et du quatrième côté (24) de l'objet ;
la première piste de balayage et la seconde piste de balayage sont combinées pour former une piste fermée entourant l'objet ; et
le premier dispositif de porte (51) et le second dispositif de porte (52) sont agencés sur deux côtés opposés de la région d'inspection (18), dans lequel le premier dispositif de rail guide (103) s'étend le long d'un sommet du second dispositif de porte (52) et le second dispositif de rail guide (104) s'étend le long d'un sommet du premier dispositif de porte (51).

2. Appareil d'imagerie de balayage holographique tridimensionnelle à ondes millimétriques (100) selon la revendication 1, **caractérisé en ce que** la direction de balayage de chacun parmi le premier module émetteur-récepteur à ondes millimétriques et le second module émetteur-récepteur à ondes millimétriques est une direction horizontale et chacun parmi le premier réseau d'antennes d'émetteur-récepteur à ondes millimétriques (11) et le second réseau d'antennes d'émetteur-récepteur à ondes millimétriques (12) s'étend verticalement.

3. Appareil d'imagerie de balayage holographique tridimensionnelle à ondes millimétriques (100) selon la revendication 1, **caractérisé en ce que** la direction de balayage du premier module émetteur-récepteur à ondes millimétriques est opposée à la direction de balayage du second module émetteur-récepteur à ondes millimétriques.

4. Appareil d'imagerie de balayage holographique tridimensionnelle à ondes millimétriques (100) selon la revendication 1, **caractérisé en ce que** chacune parmi la première piste de balayage et la seconde piste de balayage est une piste en forme de L, une piste en forme d'arc elliptique ou une piste formée d'une combinaison d'une ligne linéaire et d'un arc circulaire.

5. Appareil d'imagerie de balayage holographique tridimensionnelle à ondes millimétriques (100) selon la revendication 1, **caractérisé en ce qu'**un passage pour l'entrée et la sortie de l'objet est prévu entre le premier dispositif de rail guide (103) et le second dispositif de rail guide (104).

6. Appareil d'imagerie de balayage holographique tridimensionnelle à ondes millimétriques (100) selon la revendication 1, **caractérisé en ce que** l'entraînement (30) comprend :
une ou plusieurs roues motrices (31, 32, 33, 34) ;
une ou plusieurs courroies de transmission (35) en prise avec la roue motrice (31, 32, 33, 34) qui doit être entraînée par la roue motrice (31, 32, 33, 34) pour se déplacer ; et
une première base coulissante (36) et une seconde base coulissante (37) reliées au premier module émetteur-récepteur à ondes millimétriques et au second module émetteur-récepteur à ondes millimétriques respectivement et montées sur une même courroie de transmission (35) ou sur des courroies de transmission (35) différentes respectivement.

7. Appareil d'imagerie de balayage holographique tridimensionnelle à ondes millimétriques (100) selon la revendication 1, **caractérisé en ce qu'**au moins l'un parmi le premier dispositif de porte (51) et le second dispositif de porte (52) comprend :
un panneau de porte coulissant (61, 62) qui peut coulisser par rapport au logement (1) ;
un dispositif d'entraînement (70) pour le panneau de porte coulissant (61, 62) configuré pour entraîner le panneau de porte coulissant afin de coulisser de telle sorte que le passage soit ouvert avant que le premier module émetteur-récepteur à ondes millimétriques et le second module émetteur-récepteur à ondes millimétriques commencent à balayer et après qu'ils ont arrêté de balayer, et le passage soit fermé lorsque le premier module émetteur-récepteur à ondes millimétriques et le second module émetteur-récepteur à ondes millimétriques sont en train de balayer.

8. Appareil d'imagerie de balayage holographique tridimensionnelle à ondes millimétriques (100) selon la revendication 1, **caractérisé en ce qu'**au moins l'un parmi le premier dispositif de porte (51) et le second dispositif de porte (52) comprend :
un premier panneau de porte coulissant (61) et un second panneau de porte coulissant (62) qui peuvent coulisser par rapport au logement (1) dans des directions opposées l'une à l'autre ;
une courroie coulissante de panneau de porte (71) présentant une première partie de courroie (711) et une seconde partie de courroie (712) qui peuvent être déplacées dans des directions opposées, la première partie de courroie (711) et la seconde partie de courroie (712) étant reliées au premier panneau de porte coulissant (61) et au second panneau de porte coulissant (62) respectivement et configurées pour entraîner le premier panneau de porte coulissant (61) et le second panneau de porte coulissant (62) à coulisser dans des directions opposées ;
une première poulie (73) et une seconde poulie (74) en prise avec la courroie coulissante de panneau de porte (71) pour entraîner la courroie coulissante de panneau de porte (71) à se déplacer, la première partie de courroie (711) et la seconde partie de courroie (712) étant agencées sur les deux côtés de l'une quelconque parmi la première poulie (73) et la seconde poulie (74) respectivement ; et
un moteur d'entraînement configuré pour entraîner au moins l'une parmi la première poulie (73) et la seconde poulie (74) à tourner.

9. Appareil d'imagerie de balayage holographique tridimensionnelle à ondes millimétriques (100) selon l'une quelconque des revendications 1, 7 et 8, **caractérisé en ce que** le logement (1) présente une première paroi de logement (91) et une seconde paroi de logement (92), dans lequel des passages de balayage du premier module émetteur-récepteur à ondes millimétriques et du second module émetteur-récepteur à ondes millimétriques sont définis entre la première paroi de logement (91) et la seconde paroi de logement (92) et chacun des panneaux de porte (61, 62) présente une première paroi de panneau de porte (611, 621) et une seconde paroi de panneau de porte (612, 622), et au moins l'un parmi le premier module émetteur-récepteur à ondes millimétriques et le second module émetteur-récepteur à ondes millimétriques est configuré pour balayer le long de la première paroi de panneau de porte (611, 621) et de la seconde paroi de panneau de porte (612, 622).

10. Appareil d'imagerie de balayage holographique tridimensionnelle à ondes millimétriques (100) selon la revendication 9, **caractérisé en ce que** la première paroi de logement (91) est plus proche de la région d'inspection (18) que la seconde paroi de logement (92) et la première paroi de panneau de porte (611, 621) est plus proche de la région d'inspection (18) que la seconde paroi de panneau de porte (612, 622), dans lequel la première paroi de logement (91) et la première paroi de panneau de porte (611, 621) sont au moins transparentes pour une onde millimétrique utilisée par le premier module émetteur-récepteur à ondes millimétriques et le second module émetteur-récepteur à ondes millimétriques.

11. Appareil d'imagerie de balayage holographique tridimensionnelle à ondes millimétriques (100) selon l'une quelconque des revendications 1-8, comprenant en outre :
un dispositif de traitement de données (107) relié sans fil ou avec des fils au premier module émetteur-récepteur à ondes millimétriques et/ou au second module émetteur-récepteur à ondes millimétriques pour recevoir des données de balayage de quatre côtés de l'objet depuis le premier module émetteur-récepteur à ondes millimétriques et/ou le second module émetteur-récepteur à ondes millimétrique et produire une image holographique à ondes millimétriques/des images holographiques à ondes millimétriques ; et
un dispositif d'affichage (109) relié au dispositif de traitement de données (107) et configuré pour recevoir et afficher l'image/les images holographique à ondes millimétriques depuis le dispositif de traitement de données (107).

12. Procédé d'inspection d'un corps humain ou d'un article à l'aide d'un appareil d'imagerie de balayage holographique tridimensionnelle à ondes millimétriques, comprenant :
l'agencement du corps humain ou de l'article pour entrer dans une région d'inspection et le positionnement d'un premier module émetteur-récepteur à ondes millimétriques et d'un second module émetteur-récepteur à ondes millimétriques au niveau de leurs positions de début de balayage respectivement ;
l'entraînement du premier module émetteur-récepteur à ondes millimétriques et du second module émetteur-récepteur à ondes millimétriques par un entraînement pour se déplacer depuis leurs positions de début de balayage vers leurs positions de fin de balayage le long d'un premier dispositif de rail guide et d'un second dispositif de rail guide respectivement pour balayer le corps humain ou l'article, de manière à acquérir des données holographiques ;
la transmission des données holographiques acquises par le premier module émetteur-récepteur à ondes millimétriques et le second module émetteur-récepteur à ondes millimétriques pendant le balayage à un dispositif de traitement de données, sous le balayage et/ou après le balayage ; et
la reconstruction des données holographiques à l'aide du dispositif de traitement de données pour produire une image holographique à ondes millimétriques/des images holographiques à ondes millimétriques du corps humain ou de l'article ;
**caractérisé en ce que**,
le premier module émetteur-récepteur à ondes millimétriques et le second module émetteur-récepteur à ondes millimétriques sont entraînés par l'entraînement pour se déplacer depuis leurs positions de début de balayage vers leurs positions de fin de balayage le long du premier dispositif de rail guide et du second dispositif de rail guide respectivement pour balayer quatre côtés du corps humain ou de l'article, de manière à acquérir les données holographiques de quatre plans ;
l'appareil d'imagerie de balayage holographique tridimensionnelle à ondes millimétriques comprend en outre un logement configuré pour entourer la région d'inspection ;
le logement présente un premier dispositif de porte et un second dispositif de porte, et un passage pour que le corps humain ou l'article entre et sorte de la région d'inspection est prévu entre le premier dispositif de porte et le second dispositif de porte ;
dans lequel
le premier dispositif de rail guide s'étend au moins le long du premier côté et du deuxième côté du corps humain ou de l'article, et le second dispositif de rail guide s'étend au moins le long du troisième côté et du quatrième côté du corps humain ou de l'article, le troisième côté étant opposé au premier côté et le quatrième côté étant opposé au deuxième côté ;
la première piste de balayage et la seconde piste de balayage sont combinées pour former une piste fermée entourant l'objet ; et
le premier dispositif de porte et le second dispositif de porte sont agencés sur deux côtés opposés de la région d'inspection, dans lequel le premier dispositif de rail guide s'étend le long d'un sommet du second dispositif de porte et le second dispositif de rail guide s'étend le long d'un sommet du premier dispositif de porte.

13. Procédé selon la revendication 12, comprenant en outre :
l'ouverture du premier dispositif de porte et du second dispositif de porte de l'appareil d'imagerie de balayage holographique tridimensionnelle à ondes millimétriques, avant que le corps humain ou l'article n'entre dans la région d'inspection ; et
la fermeture du premier dispositif de porte et du second dispositif de porte après que le corps humain ou l'article est entré dans la région d'inspection et avant que le premier module émetteur-récepteur à ondes millimétriques et le second module émetteur-récepteur à ondes millimétriques ne commencent à balayer.
